# FASCICULE DE BREVET EUROPEEN

(11) **EP 1 764 237 B1**
(45) Date de publication et mention de la délivrance du brevet: **26.11.2014**
(21) Numéro de dépôt: 06120408.7
(22) Date de dépôt: 11.09.2006
(51) Int. Cl.: B60C 11/13, B60C 11/04

(54) **Bande de roulement de pneumatique pourvue d'un dispositif anti-usure irreguliere**
Reifenlauffläche mit einer Anordnung zum Schutz der unregelmässigen Abnutzung
Tyre tread with an anti-uneven wear device

(30) Priorité: 15.09.2005 FR 0509518
(43) Date de publication de la demande: 21.03.2007
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: Parmentier, Jean-François, 63300 Thiers (FR)
(74) Mandataire: Diernaz, Christian

(56) Documents cités:
- EP-A- 0 825 039
- GB-A- 903 389
- US-A- 2 706 509
- US-A- 4 114 671
- US-B1- 6 176 284
- PATENT ABSTRACTS OF JAPAN vol. 013, no. 130 (M-808), 30 mars 1989 (1989-03-30) & JP 63, 297108, A, (SUMITOMO RUBBER IND LTD), 5 décembre 1988 (1988-12-05)
- PATENT ABSTRACTS OF JAPAN vol. 1999, no. 12, 29 octobre 1999 (1999-10-29) & JP 11, 180116, A, (SUMITOMO RUBBER IND LTD), 6 juillet 1999 (1999-07-06)

## Description

La présente invention a pour objet une amélioration des bandes de roulement pour des pneumatiques destinés à équiper des véhicules poids lourd; elle concerne en particulier la sculpture de ces bandes de roulement.

Cette invention est notamment, mais pas exclusivement, destinée à être mise en oeuvre pour des pneumatiques à carcasse radiale et destinés aux essieux non moteur des véhicules poids lourd.

De tels pneumatiques comportent en règle générale une armature de carcasse surmontée radialement à l'extérieur par une ceinture de sommet, elle-même surmontée d'une bande de roulement. Cette bande de roulement est pourvue d'une sculpture formée essentiellement de nervures d'orientation générale circonférentielle délimitées par des rainures de même orientation ou de blocs délimités par des rainures circonférentielles et des rainures transversales ou d'une combinaison de blocs et de nervures.

### État de la technique

Dans le cas d'une sculpture de bande de roulement présentant des rainures d'orientation circonférentielle, on a constaté que des usures localisées (dites "usures irrégulières") pouvaient survenir sur les bords des nervures encadrant certaines desdites rainures. Ces usures prennent naissance assez rapidement et se développent dans une première phase de l'usage du pneumatique ; par première phase, on entend ici des distances inférieures à 30000 km, ce qui est relativement faible comparativement aux distances moyennes d'usage d'un pneumatique qui peuvent atteindre 100000 à 300000 km voire plus selon les conditions de roulage et d'utilisation.

Pour empêcher l'apparition de telles usures irrégulières, il a été proposé de pourvoir certaines des rainures d'une sculpture de bande de roulement avec un dispositif, dit "anti-usure", placé dans le fond de ces rainures et s'étendant dans le sens de l'épaisseur de la bande soit jusqu'au niveau de la surface de roulement à l'état initial soit légèrement au dessous. Dans un cas comme dans l'autre, un mécanisme d'usure différentielle apparaît entre les nervures voisines et le dispositif intercalé entre ces nervures qui maintient une petite différence de niveau . Ce mécanisme d'usure différentielle est la conséquence directe de rayons de roulement différents induisant un glissement différentiel entre les nervures et les dispositifs intercalés entre lesdites nervures.

Le brevet US 4480671-A décrit une sculpture comportant dans une rainure un dispositif anti-usure irrégulière sous la forme d'une nervure, cette nervure présentant une surface radialement externe formée de plusieurs surfaces décalées les unes par rapport aux autres.

Le document JP-A-63297108 divulgue une bande de roulement selon le préambule de la revendication 1.

Ces dispositifs sont toutefois imparfaits en ce sens que si dans une première partie du roulage, une modification des efforts tangentiels exercés par la route sur le pneumatique survient, il a été observé que, sur la durée, les avantages de tels dispositifs disparaissaient au point que des usures irrégulières peuvent apparaître après 30 000 km et qu'après apparition ces usures se maintiennent.

Un autre inconvénient parfois observé réside dans le fait que la surface externe du dispositif initialement en décalage vers l'intérieur par rapport à la surface de roulement du pneumatique voire au même niveau que ladite surface, peut se décaler radialement vers l'extérieur et qu'alors l'effet attendu sur l'usure irrégulière n'est plus obtenu.

La présente invention propose un dispositif perfectionné ne présentant pas les inconvénients qui ont été rappelés.

L'invention a pour objet une bande de roulement de pneumatique pourvue d'une surface de roulement destinée à être en contact avec une chaussée, cette bande de roulement comportant une sculpture formée par des éléments de relief délimitant au moins deux rainures de largeur Lr et d'orientation générale circonférentielle, au moins une desdites rainures comprenant une pluralité de plots anti-usure espacés de manière sensiblement régulière dans la direction longitudinale (circonférentielle) de la bande. Chaque plot de hauteur maximale H est disjoint des plots voisins dans la rainure, et comprend une surface externe formée de deux parties latérales faisant face aux parois des éléments de la sculpture de manière à ce que ledit plot soit disjoint desdits éléments de sculpture. Chaque plot comprend en outre une surface externe reliant lesdites parties latérales, cette surface externe étant formée d'au moins deux surfaces de contact destinées à venir en contact avec le sol pendant le roulage, ces surfaces de contact étant décalées radialement vers l'intérieur par rapport à la surface de roulement et en outre décalées radialement les unes par rapport aux autres dans le sens de la hauteur du plot (c'est-à-dire suivant la direction de la profondeur de la rainure), le décalage de hauteur entre deux surfaces de contact d'un même plot étant au moins égal à 25 % de la hauteur maximale du plot. Cette bande est caractérisée en ce que la longueur mesurée dans la direction circonférentielle de la surface de contact radialement la plus à l'extérieur de chaque plot est comprise entre 60 et 85% de la longueur circonférentielle totale mesurée à la base du plot.

Préférentiellement, la bande de roulement est telle que les plots d'une même rainure sont distants les uns des autres d'au moins 2 % de la longueur moyenne d'empreinte du pneumatique soumis à ses conditions nominales de fonctionnement.

Les conditions nominales de fonctionnement sont définies notamment par la norme ETRTO pour chaque dimension de pneumatique.

Préférentiellement le décalage de hauteur entre la surface de contact de chaque plot, la plus éloignée radialement vers l'extérieur de ce plot, et la surface de roulement du pneumatique est au plus égal à 25% de la profondeur de la rainure dans laquelle est disposé ce plot. Cette disposition permet de conférer à la sculpture une plus grande résistance aux cassures.

Préférentiellement, les parties latérales de chaque plot sont espacées dans la direction transversale d'au moins 30% de la largeur de la rainure dans laquelle sont disposés les plots.

Préférentiellement, le décalage entre la surface de contact de chaque plot la plus proche du fond de la rainure est au plus égal à 50% de la hauteur maximale du plot, de façon à favoriser les échanges thermiques entre le pneumatique et l'air ambiant.

Dans le cas où la bande de roulement comprend un sens préférentiel de roulage, il est judicieux de pourvoir au moins une rainure avec une pluralité de plots, chaque plot comprenant au moins trois surfaces de contact, lesdites surfaces de contact étant étagées par rapport à la surface de roulement, la surface de contact la plus proche de l'entrée dans le contact - compte tenu du sens préférentiel de roulage - étant la plus proche de la surface de roulement à l'état neuf non usé.

Les variantes qui ont été décrites précédemment peuvent aisément être combinées entre elles par la personne du métier recherchant une amélioration de la performance en usure irrégulière d'un pneumatique poids lourd.

D'autres caractéristiques et avantages de l'invention ressortent de la description faite ci-après en référence aux dessins annexés qui montrent, à titre d'exemples non limitatifs, plusieurs formes de réalisation de l'objet de l'invention.

La figure 1 montre une vue partielle d'une sculpture d'une bande de roulement de pneumatique dont au moins une rainure comprend un dispositif selon l'invention ;

La figure 2 montre une vue en coupe selon la ligne II-II de la sculpture montrée à la figure 1 ;

La figure 3 montre une deuxième variante de dispositif selon l'invention ;

La figure 4 montre une troisième variante de dispositif selon l'invention.

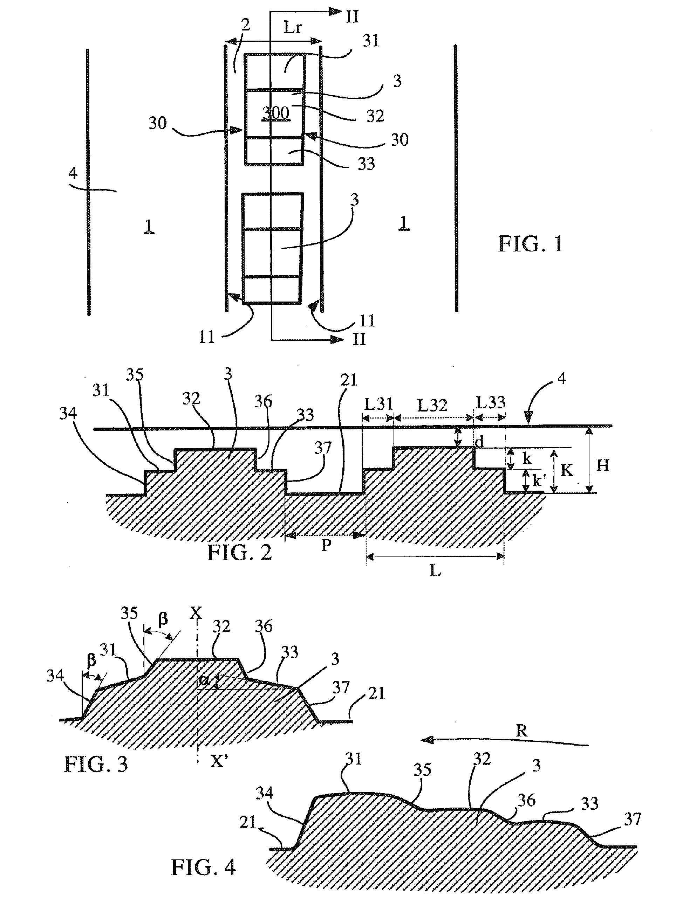

Sur la figure 1, on a représenté une vue en élévation d'une partie d'une sculpture d'un pneumatique de dimension 315/70R22.5. Sur cette vue, on voit deux nervures 1 d'orientation circonférentielle, de largeur: 30 mm dans l'exemple montré, délimitant une rainure 2 de profondeur H égale à 14.5 mm et de largeur égale à 14 mm. Les nervures 1 forment par leur surface radialement externe une surface de roulement 4 destinée à être en contact avec la chaussée pendant le roulage. Dans la rainure 2, on trouve une pluralité de plots 3 composant un dispositif évitant l'apparition d'une usure irrégulière sur les bords des nervures 1 de part et d'autre des plots. Ces plots 3 sont tous sensiblement de même dimension et sont répartis de manière uniforme dans la direction circonférentielle. Les plots peuvent être indistinctement placés entre deux nervures quelconques ou rangées d'éléments d'une sculpture et notamment dans au moins une des rainures la plus proche des bords d'une bande de roulement.

Dans l'exemple décrit, chaque plot 3 comprend une surface externe formée par deux surfaces latérales 11 faisant chacune face aux parois latérales des nervures 1 ainsi qu'une surface radialement à l'extérieur 300. La surface radialement à l'extérieur 300 est destinée à venir au moins en partie en contact avec la chaussée pendant le roulage. Cette surface externe 300 est formée d'une pluralité de surfaces de contact 31, 32, 33 parallèles à la surface de roulement 4 de la bande de roulement et de surfaces de liaison 34, 35, 36, 37 perpendiculaires à la surface de roulement 4, lesdites surfaces parallèles et perpendiculaires étant disposées en alternance. Les surfaces de contact coupent les surfaces de liaison pour former des arêtes orientées dans une direction perpendiculaire à la direction principale de la rainure.

Sur la figure 2, montrant une vue partielle en coupe selon une ligne II-II prise sur la figure 1, on peut voir deux plots 3 moulés sur le fond 21 de la rainure 2, chaque plot 3 ayant une base, correspondant à la partie du plot sur le fond de la rainure, de longueur circonférentielle notée L et égale dans le cas présent à 24 mm. Les plots de géométrie identiques sont disposés de manière uniforme dans la direction circonférentielle avec un pas P égal à 28 mm (ce qui représente pour la dimension choisie un nombre total de plots égal à 108). La largeur des plots, mesurée dans le sens de la largeur des rainures, est supérieure à 30% de la largeur de la rainure ; la largeur des plots est ici égale à 6 mm.

La surface radialement à l'extérieur 300 de chaque plot 3 comprend une succession de surfaces de contact 31, 32, 33 qui sont sensiblement parallèles à la surface de roulement 4 et en alternance des surfaces de liaison 34, 35, 36, 37 qui sont elles perpendiculaires à ladite surface de roulement 4.

La surface de contact 32 est la plus proche de la surface de roulement et est décalée radialement vers l'intérieur par rapport à cette surface d'une distance d.

Les autres surfaces de contact 31 et 33, situées de part et d'autre de la surface 32 sont décalées radialement vers l'intérieur par rapport à la surface de contact 32 la plus proche de la surface de roulement à l'état initial. Ce décalage k est identique pour les deux surfaces 31 et 33. Par ailleurs ces surfaces de contact 31 et 32 sont elles-mêmes décalées d'une quantité k' du fond 21 de la rainure 2. Le décalage de hauteur entre deux surfaces de contact d'un même plot est au moins égal à 25 % de la hauteur maximale du plot : dans l'exemple décrit, ce décalage k est ici égal à 50% de la hauteur K du plot.

Les parties externes 31, 32, 33 sont destinées à venir en contact avec la chaussée au fur et à mesure de l'usure de la bande de roulement. La surface de contact intermédiaire 32 (longitudinalement entre les surfaces 31 et 33) est décalée de 2.4 mm par rapport à la surface de roulement 4, tandis que les deux autres surfaces 31 et 33 sont décalées d'au moins 7.5 mm et d'au plus de 9.5 mm par rapport à la même surface. Dans le cas présent, les surfaces de contact 31 et 33 situées de part et d'autre de la surface de contact intermédiaire 32 sont décalées de 6 mm par rapport à ladite surface intermédiaire ; la hauteur K des plots est égale à 12.1 mm.

Les longueurs des surfaces de contact 31, 32, 33 de chaque plot mesurées dans la direction circonférentielle sont dans l'exemple décrit : L31 égal à 4.5 mm, L33 égal à 4.5 mm, L32 égal à 14 mm. La distance circonférentielle P séparant deux plots 3 est ici égale à 5 mm.

Pour des dimensions usuelles de pneumatique pour poids lourd, la longueur maximale L de la base de chaque plot (3) est au moins égale à 20 mm et au plus égale à 80 mm.

Grâce au dispositif anti-usure de l'invention constitué par cette pluralité de plots 3, il est possible de maîtriser le fonctionnement dudit dispositif en obtenant une bonne efficacité dans la prévention de l'usure irrégulière tout en évitant les risques d'apparition d'un décalage des surfaces de contact de ces dispositifs radialement vers l'extérieur de la surface de roulement. On évite ainsi que la surface radialement la plus à l'extérieur 32 sorte radialement à l'extérieur de la surface de roulement 4 après une usure partielle (c'est-à-dire après un roulage ayant usé ladite bande sur une partie de son épaisseur).

Par direction radiale, on entend, dans le présent document, une direction s'étendant perpendiculairement à l'axe de rotation du pneumatique pourvu de cette bande de roulement ou plus généralement de la direction de l'épaisseur de la bande. Par radialement vers l'extérieur, on entend vers l'extérieur par rapport à l'axe de rotation du pneumatique. Une deuxième surface est dite "située radialement à l'extérieur d'une première surface" dès lors que cette deuxième surface est radialement plus éloignée de l'axe de rotation que la première surface.

Dans la variante de dispositif montrée en coupe à la figure 3, chaque plot présente une géométrie symétrique par rapport à un plan médian repéré XX', ce plan étant un plan contenant l'axe de rotation du pneumatique. La surface externe de chaque plot 3 est constituée d'une succession de surfaces de contact 31, 32, 33, la surface de contact intermédiaire 32 étant sensiblement parallèle à la surface de roulement du pneumatique, tandis que les deux autres surfaces de contact de part et d'autre de cette surface de contact intermédiaire font des angles α (*alpha*) avec cette surface de contact intermédiaire, ces angles α (*alpha*) étant, en valeur absolue, au plus égaux à 10 degrés.

Les surfaces de contact 31, 32, 33, et la surface de fond 21 de rainure sont reliées entre elles par des surfaces de liaison 34, 35, 36, 37 faisant un angle β (*beta*) avec une perpendiculaire à la surface de roulement passant par le point radialement le plus à l'intérieur de ladite surface inclinée vue dans le plan de la figure 3. L'angle β (*beta*) de ces surfaces de liaison 34, 35, 36, 37 est, en valeur absolue, identique pour toutes ces surfaces et différent de zéro degré.

Préférentiellement, l'angle des surfaces de liaison (34, 35, 36, 37) est au moins égal en valeur absolue à 5 degrés avec une perpendiculaire à la surface de roulement.

Dans une variante non montrée, ces angles α (*alpha*) et β (*beta*) peuvent être choisis de façon individuelle et notamment être adaptés à une sculpture présentant une direction préférentielle de roulage. De façon avantageuse, les angles des deuxième et troisième surfaces de contact de part et d'autre de la première surface de contact sont différents, l'écart entre lesdits angles en valeur absolue étant au moins égal à 5 degrés.

De façon préférentielle, les angles a et b des surfaces de contact et des surfaces de liaison sont compris entre 0° et 45°.

Dans la variante de dispositif montrée en coupe à la figure 4, les plots 3 ne présentent plus une géométrie ayant un plan de symétrie. Ces plots 3 forment un dispositif anti-usure irrégulière d'une bande de roulement ayant une direction préférentielle de roulage indiquée par la flèche R sur la figure. Dans cet exemple, la surface radialement la plus à l'extérieur 31 est reliée par une surface inclinée 34 au fond 21 de la rainure dans laquelle les plots 3 sont formés. Par ailleurs, chaque plot 3 comprend deux autres surfaces 32, 33 sensiblement parallèles à la surface de roulement initiale et présentant des décalages radialement vers l'intérieur plus grands que le décalage de la surface la plus proche de la surface de roulement. Dans cet exemple, les surfaces de contact 31, 32, 33 destinées à venir en contact avec la chaussée sont agencées de manière à ce que la surface de contact 31 la plus proche radialement de la surface de roulement est la surface qui est, dans la direction circonférentielle, la plus proche de l'entrée dans le contact. En fait, cette surface de contact 31 comprend deux arêtes A et B qui se succèdent dans le contact avec la chaussée, l'arête A entrant la première en contact correspondant à l'intersection de la surface inclinés 34 reliant cette surface de contact 31 au fond 21 de la rainure.

Des surfaces de liaison 35, 36, 37 relient les surfaces de contact 31, 32, 33 et le fond 21 de rainure. Les divers exemples qui viennent d'être décrit avec le support des figures peuvent aisément être combinés par la personne du métier : notamment une variante peut être mise en oeuvre dans une rainure située près du bord d'une bande de roulement tandis qu'une autre variante peut être employée pour au moins certaines des autres rainures.

De même, les raccordements entre les surfaces externes des plots qui ont été décrits comme étant discontinus peuvent faire l'objet d'amélioration en réalisant par exemple des rayons de raccordement entre les différentes surfaces.

Par disposition des plots sensiblement régulière, on entend que ceux-ci sont disposés soit de manière régulière (avec un pas constant) ou bien quasiment régulière (les variations de pas peuvent être différente de zéro).

L'invention concerne également un pneumatique pourvu d'une quelconque bande de roulement telle que définie dans les revendications.

## Revendications

1. Bande de roulement de pneumatique pourvue d'une surface de roulement (4) destinée à être en contact avec une chaussée, cette bande de roulement comportant une sculpture formée par des éléments de relief (1) délimitant au moins deux rainures (2) de largeur (Lr) et d'orientation générale circonférentielle, au moins une desdites rainures (2) comprenant une pluralité de plots (3) anti-usure espacés de manière sensiblement régulière dans la direction longitudinale, c'est-à-dire circonférentielle, de la bande, chaque plot (3) de hauteur maximale (H) à sa base étant disjoint de ses voisins dans la rainure, chaque plot comprenant une surface externe formée de deux parties latérales (30) faisant face aux parois latérales des éléments (1) de la sculpture et une surface externe (300) entre lesdites parties latérales (30), la surface externe (300) de chaque, plot (3) étant formée d'au moins deux surfaces de contact (31, 32, 33) destinées à venir en contact avec le sol, ces surfaces de contact (31, 32, 33) étant décalées radialement vers l'intérieur par rapport à la surface de roulement (4) et de plus décalées radialement les unes par rapport aux autres dans le sens de la hauteur du plot, le décalage de hauteur entre deux surfaces de contact successives d'un même plot étant au moins égal à 25 % de la hauteur maximale du plot, cette bande étant **caractérisée en ce que** chaque plot (3) comprend des surfaces de contact (31, 32, 33) ayant des longueurs circonférentielles respectives (L31, L32, L33), la longueur de la surface de contact la plus proche de la surface de roulement (4) est comprise entre 60 et 85% de la longueur circonférentielle totale du plot mesurée à la base dudit plot.

2. Bande de roulement selon la revendication 2 **caractérisée en ce que** les plots (3) d'une même rainure sont distants les uns des autres d'une distance (P) au moins égale à 2 % de la longueur moyenne d'empreinte du pneumatique soumis à ses conditions nominales de fonctionnement.

3. Bande de roulement selon la revendication 1 ou la revendication 2 **caractérisée en ce que** les parties latérales sont espacées d'au moins 30% de la largeur (Lr) de la rainure dans laquelle sont formés les plots.

4. Bande de roulement selon l'une des revendications 1 à 3 **caractérisée en ce que** la longueur circonférentielle totale (L) de chaque plot (3) est au moins égale à 20 mm et au plus égale à 80 mm.

5. Bande de roulement selon l'une des revendications 1 à 4 **caractérisée en ce que** chaque plot (3) comprend des surfaces de liaison (34, 35, 36, 37) reliant les surfaces de contact (31, 32, 33) décalées radialement les unes par rapport aux autres dans le sens de la hauteur du plot, ces surfaces de liaison (34, 35, 36, 37) étant inclinées d'un angle moyen au moins égal en valeur absolue à 5 degrés avec une perpendiculaire à la surface de roulement.

6. Bande de roulement selon l'une des revendications 1 à 5 **caractérisée en ce que** chaque plot (3) comprend trois surfaces de contact (31, 32, 33), une première surface de contact (32) étant la plus proche de et sensiblement parallèle à la surface de roulement (4) de la bande à l'état neuf non usée, les deux autres surfaces de contact (31, 33) formant avec la première surface de contact des angles étant, en valeur absolue, au plus égaux à 10 degrés.

7. Bande de roulement selon l'une des revendications 1 à 6 **caractérisée en ce que**, cette bande a un sens préférentiel de roulage et **en ce qu'**au moins dans une rainure (2), chaque plot (3) comprend au moins trois surfaces de contact (31, 32, 33), lesdites surfaces de contact étant étagées par rapport à la surface de roulement, la surface de contact la plus proche de l'entrée dans le contact - compte tenu du sens préférentiel de roulage - étant la plus proche de la surface de roulement à l'état neuf non usé.

8. Pneumatique pour véhicule poids lourd **caractérisé en ce qu'**il comprend une bande de roulement défini selon l'une quelconque des revendications 1 à 7.

## Patentansprüche

1. Luftreifen-Laufbahn, die mit einer Laufoberfläche (4) versehen ist, die dazu bestimmt ist, mit einer Fahrbahn in Kontakt zu gelangen, wobei diese Laufbahn ein Profil aufweist, das durch Reliefelemente (1) gebildet ist, die wenigstens zwei Rillen (2) mit Breite (Lr) und mit einer im Allgemeinen kreisförmigen Orientierung begrenzen, wobei wenigstens eine der Rillen (2) mehrere verschleißfeste Stollen (3) aufweist, die in der Längsrichtung, d. h. in der Umfangsrichtung der Bahn im Wesentlichen regelmäßig beabstandet sind, wobei jeder Stollen (3) mit maximaler Höhe (H) an seiner Basis von seinen Nachbarn in der Rille getrennt ist, wobei jeder Stollen eine äußere Oberfläche aufweist, die aus zwei seitlichen Teilen (30), die seitlichen Wänden von Elementen (1) des Profils zugewandt sind, und aus einer äußeren Oberfläche (300) zwischen den seitlichen Teilen (30) gebildet ist, wobei die äußere Oberfläche (300) jedes Stollens (3) aus wenigstens zwei Kontaktoberflächen (31, 32, 33) gebildet ist, die dazu bestimmt sind, mit dem Boden in Kontakt zu gelangen, wobei diese Kontaktoberflächen (31, 32, 33) in Bezug auf die Laufoberfläche (4) radial nach innen versetzt sind und außerdem in Höhenrichtung des Stollens radial zueinander versetzt sind, wobei der Höhenversatz zwischen zwei aufeinander folgenden Kontaktoberflächen desselben Stollens wenigstens gleich 25 % der maximalen Höhe des Stollens beträgt, wobei diese Bahn **dadurch gekennzeichnet ist, dass** jeder Stollen (3) Kontaktoberflächen (31, 32, 33) umfasst, die jeweilige Umfangslängen (L31, L32, L33) besitzen, wobei die Länge der Kontaktoberfläche, die sich am nächsten bei der Laufoberfläche (4) befindet, im Bereich von 60 bis 85 % der Gesamtumfangslänge des Stollens gemessen an der Basis des Stollens liegt.

2. Laufbahn nach Anspruch 2, **dadurch gekennzeichnet, dass** die Stollen (3) derselben Rille voneinander um eine Strecke (P) beabstandet sind, die wenigstens gleich 2 % der mittleren Länge der Aufstandsfläche des Luftreifens, der Nennbetriebsbedingungen unterliegt, ist.

3. Laufbahn nach Anspruch 1 oder Anspruch 2, **dadurch gekennzeichnet, dass** die seitlichen Teile um wenigstens 30 % der Breite (Lr) der Rille, in der die Stollen gebildet sind, beabstandet sind.

4. Laufbahn nach einem der Ansprüche 1 bis 3, **dadurch gekennzeichnet, dass** die gesamte Umfangslänge (L) jedes Stollens (3) wenigstens 20 mm und höchstens 80 mm ist.

5. Laufbahn nach einem der Ansprüche 1 bis 4, **dadurch gekennzeichnet, dass** jeder Stollen (3) Verbindungsoberflächen (34, 35, 36, 37) umfasst, die die Kontaktoberflächen (31, 32, 33), die zueinander in Richtung der Höhe des Stollens radial versetzt sind, verbinden, wobei diese Verbindungsoberflächen (34, 35, 36, 37) um einen mittleren Winkel geneigt sind, der dem Absolutwert nach wenigstens gleich 5 Grad zu einer Normalen zu der Laufoberfläche beträgt.

6. Laufbahn nach einem der Ansprüche 1 bis 5, **dadurch gekennzeichnet, dass** jeder Stollen (3) drei Kontaktoberflächen (31, 32, 33) umfasst, wobei sich eine erste Kontaktoberfläche (32) im nicht gebrauchten neuen Zustand am nächsten bei der Laufoberfläche (4) der Bahn befindet und hierzu im Wesentlichen parallel ist, während die zwei anderen Kontaktoberflächen (31, 33) mit der ersten Kontaktoberfläche Winkel bilden, die dem Absolutwert nach höchstens gleich 10 Grad betragen.

7. Laufbahn nach einem der Ansprüche 1 bis 6, **dadurch gekennzeichnet, dass** diese Bahn eine bevorzugte Rollrichtung hat und dass wenigstens in einer Rille (2) jeder Stollen (3) wenigstens drei Kontaktoberflächen (31, 32, 33) umfasst, wobei die Kontaktoberflächen in Bezug auf die Laufoberfläche gestuft sind, wobei sich die Kontaktoberfläche, die sich am nächsten bei dem Eintritt in den Kontakt - gerechnet in der bevorzugten Laufrichtung - befindet, im nicht gebrauchten neuen Zustand am nächsten bei der Laufoberfläche befindet.

8. Luftreifen für Schwerlastfahrzeug, **dadurch gekennzeichnet, dass** er eine Laufbahn, wie sie in einem der Ansprüche 1 bis 7 definiert ist, umfasst.

## Claims

1. A tyre tread provided with a running surface (4) intended to be in contact with a roadway, this tread comprising a tread pattern formed by elements in relief (1) defining at least two grooves (2) of a width (Lr) and of generally circumferential orientation, at least one of said grooves (2) comprising a plurality of anti-wear studs (3) spaced substantially regularly in the longitudinal, that is to say circumferential, direction of the tread, each stud (3) of a maximum height (H) at its base being separate from its neighbours in the groove, each stud comprising an outer surface formed of two lateral parts (30) facing the lateral walls of the tread pattern elements (1) and an outer surface (300) between said lateral parts (30), the outer surface (300) of each stud (3) being formed of at least two contact surfaces (31, 32, 33) intended to come into contact with the ground, these contact surfaces (31, 32, 33) being offset radially towards the inside relative to the running surface (4) and additionally being offset radially relative to one another in the direction of the height of the stud, the offset with regard to height between two successive contact surfaces of one and the same stud being at least equal to 25 % of the maximum height of the stud, this tread being **characterised in that** each stud (3) comprises contact surfaces (31, 32, 33) having respective circumferential lengths (L31, L32, L33), the length of the contact surface closest to the running surface (4) being between 60 and 85% of the total circumferential length of the stud measured at the base of said stud.

2. A tread according to claim 2, **characterised in that** the studs (3) in one and the same groove are spaced from one another by a distance (P) at least equal to 2 % of the average footprint length of the tyre under its nominal operating conditions.

3. A tread according to claim 1 or claim 2, **characterised in that** the lateral parts are spaced by at least 30% of the width (Lr) of the groove in which the studs are formed.

4. A tread according to any one of claims 1 to 3, **characterised in that** the total circumferential length (L) of each stud (3) is at least 20 mm and at most 80 mm.

5. A tread according to any one of claims 1 to 4, **characterised in that** each stud (3) comprises linking surfaces (34, 35, 36, 37) joining the contact surfaces (31, 32, 33) offset radially relative to one another in the direction of the height of the stud, these linking surfaces (34, 35, 36, 37) being inclined by a mean angle at least equal in absolute value to 5 degrees formed with a perpendicular to the running surface.

6. A tread according to any one of claims 1 to 5, **characterised in that** each stud (3) comprises three contact surfaces (31, 32, 33), a first contact surface (32) being closest to and substantially parallel to the running surface (4) of the tread in the new, unworn state, the other two contact surfaces (31, 33) forming with the first contact surface angles of, in absolute value, at most 10 degrees.

7. A tread according to any one of claims 1 to 6, **characterised in that** this tread has a preferred running direction and **in that**, at least in one groove (2), each stud (3) comprises at least three contact surfaces (31, 32, 33), said contact surfaces being stepped relative to the running surface, the contact surface closest to the start of contact - taking account of the preferred running direction - being closest to the running surface in the new, unworn state.

8. A tyre for a heavy vehicle, **characterised in that** it comprises a tread defined according to any one of claims 1 to 7.
